# EUROPEAN PATENT APPLICATION

(11) **EP 2 978 163 A1**
(43) Date of publication of application: **27.01.2016**
(21) Application number: 14306176.0
(22) Date of filing: 21.07.2014
(51) Int. Cl.: H04L 12/12

(54) **Method of data communication between devices in a first network and devices in a second network and corresponding apparatus**

(71) Applicant: Thomson Licensing, 92130 Issy-les-Moulineaux (FR)
(72) Inventor: Colmagro, Jean-Claude, 35576 Cesson-Sévigné (FR); Battini, Fabien, 35576 Cesson-Sévigné (FR); Peneau, Matthieu, 35576 Cesson-Sévigné (FR)
(74) Representative: Huchet, Anne

(57) **Abstract**

A request from a first network device, e.g. a WAN, that is destined to a second network device, e.g. a LAN, for rendering of a service to the first network device is intercepted by an intermediate device interconnecting both networks. If the second network device is in a standby state, a wake up message is transmitted to it. The request is forwarded to the second network device. The method and device allow the possibility for a first network device to use second network devices even when they are in a standby state, and removes a hindrance for these second network devices to enter into a standby state, thereby contributing to power saving.

## Description

### 1. Technical field.

The present disclosure generally relates to communication between devices in different networks (e.g. WAN-LAN) and in particular to low-power consumption state or standby state.

### 2. Technical background.

Though in the past power consumption of unused CE devices was not really an issue, it has recently been estimated that total energy consumed by unused CE devices amounts up to 7% of the electricity produced. As a large part of electrical energy is produced by power plants that reject carbon dioxide in the atmosphere, the power consumed by millions of CE devices in millions of households is suspected to contribute to global warming. Therefore, national and international regulations with regard to power consumption of consumer electronics (CE) devices have recently become more and restrictive. For example, the European Commission has carried out a study that estimated the power consumption of electrical and electronic household and office equipment products sold in the EU related to conditions providing standby to be 54 TWh in 2010, corresponding to 23 Mt CO2 emissions. If no specific measures are taken, consumption is predicted to increase to 90 TWh in 2020. The conclusion was that electricity consumption related to standby can be significantly reduced and that further regulation is needed to increase the market penetration of technologies yielding improved energy efficiency for standby. This would lead to an estimated energy saving of 36 TWh in 2020 and 49 TWh in 2025, compared to a business-as-usual scenario. The regulation specifies a default delay time after which the equipment should automatically switch into standby/off state when it is not used during the delay time. Consumers however wish that the services provided by their devices are available anywhere and anytime. "Anywhere" implies mobile use, remote and networked control, which is sometimes incompatible with standby state. The need to reduce energy consumption is in apparent contradiction with the anywhere and anytime availability requirement. It would therefore be desirable to conjugate both apparently contradicting requirements.

### 3. Summary.

The present disclosure aims at alleviating some of the inconveniences of prior art.

To this end is disclosed a method of data communication between devices in a first network and devices in second network, implemented by an intermediate device connecting the first network and the second network, the method comprising receiving a request from a first network device destined to a second network device for rendering of a service to the first network device. If the second network device for rendering the service is in a standby state, transmitting a message to the second network device for waking up the second network device from standby state; and the method further comprising forwarding the request to the second network device for rendering the service.

According to a variant embodiment of the disclosed method, it further comprises subscribing, by the intermediate device, to a reception of first notification messages from second network devices informing the intermediate device of entry of the second network devices into a standby state.

According to a variant embodiment of the disclosed method, the method comprises subscribing, by the intermediate device, to reception of second notification messages from the second network devices informing the intermediate device of exit of the second network devices from standby state.

According to a variant embodiment of the disclosed method, the first notification messages comprise data describing how to wake up the second network devices from standby state.

According to a variant embodiment of the disclosed method, when a second network device is connected to the second network via another second network device, the data comprised in the first notification message describes how to wake up the intermediate second network device.

According to a variant embodiment of the disclosed method, the intermediate device determines if a second network device is in a standby state by determining if a notification message has been received from the second network device informing the intermediate device of an entry of the second network device into standby state.

According to a variant embodiment of the disclosed method, the message for waking up a second network device from standby state is determined from a notification message, received from the second network device, comprising information allowing the intermediate device to determine how to wake up the second network device from standby state.

According to a variant embodiment of the disclosed method, the intermediate device determines if a second network device is in a standby state by transmitting a message to the second network device and starting a time out, the second network device being in a standby state if no reply message is received from the second network device before expiry of the time out.

According to a variant embodiment of the disclosed method, the first network is a Wide Area Network.

According to a variant embodiment of the disclosed method, the second network is a Local Area Network.

The present disclosure also discloses an intermediate device for connecting devices in a first network and devices connected in a second network, comprising means configured to receive a request from a first network device destined to a second network device for rendering of a service to the first network device; means configured to transmit a message to the second network device for waking up the second network device if the second network device is in a standby state; and the means configured to transmit the message to the second network device for waking up the second network device if the second network device is in a standby state being further configured to transmit the request received to the second network device for rendering of the service.

According to a variant embodiment of the disclosed intermediate device, it further comprises means configured to store subscriptions to notification messages from second network devices informing the intermediate device of entry of the second network devices into a standby state.

According to a variant embodiment of the disclosed intermediate device, it further comprises means configured to transmit subscription messages for subscribing the intermediate device to first notification messages from second network devices informing the intermediate device of entry of the second network devices into a standby state.

According to a variant embodiment of the disclosed intermediate device, it further comprises means configured to transmit subscription messages for subscribing the intermediate device to second notification messages from the second network devices informing the intermediate device of exit of the second network devices from standby state.

According to a variant embodiment of the disclosed intermediate device, the means configured to receive a request from a first network device is a Wide Area Network interface, and the means configured to transmit a message to the second network device is a Local Area Network interface.

The present disclosure also discloses an intermediate device for connecting devices in a first network and devices connected in a second network, the intermediate device comprising a first network interface configured to receive a request from a first network device destined to a second network device for rendering of a service to the first network device; a second network interface configured to transmit a message to the second network device for waking up the second network device if the second network device is in a standby state; and the second network interface being further configured to transmit the request received to the second network device for rendering of the service.

According to a variant embodiment of the disclosed intermediate device, the device further comprises a memory configured to store subscriptions to notification messages from second network devices informing the intermediate device of entry of the second network devices into a standby state.

According to a variant embodiment of the disclosed intermediate device, the second network interface is further configured to transmit subscription messages for subscribing the intermediate device to first notification messages from second network devices informing the intermediate device of entry of the second network devices into a standby state.

According to a variant embodiment of the intermediate device, the second network interface is further configured to transmit subscription messages for subscribing the intermediate device to second notification messages from the second network devices informing the intermediate device of exit of the second network devices from standby state.

The present disclosure also relates to a non-transitory program storage device, readable by a computer, tangibly embodying a program of instructions executable by the computer to perform the disclosed method and/or any of the disclosed variant embodiments of the disclosed method.

The disclosed variant embodiments can be combined to form particularly advantageous variant embodiments.

### 4. List of figures.

More advantages of the present principles will appear through the description of particular, non-restricting embodiments of the disclosure.

The embodiments will be described with reference to the following figures:
Figure 1 is a network infrastructure illustrating an application of principles of the present disclosure, according to a specific non-limiting embodiment.
Figure 2 is a sequence diagram illustrating principles related to the present disclosure.
Figure 3 is a further sequence diagram illustrating principles of the present disclosure according to a non-limiting embodiment.
Figure 4 is an example device implementing principles of the present disclosure according to a non-limiting embodiment.
Figure 5 is a flow chart of a particular advantageous non-limiting embodiment of a method according to the present principles.

### 5. Detailed description.

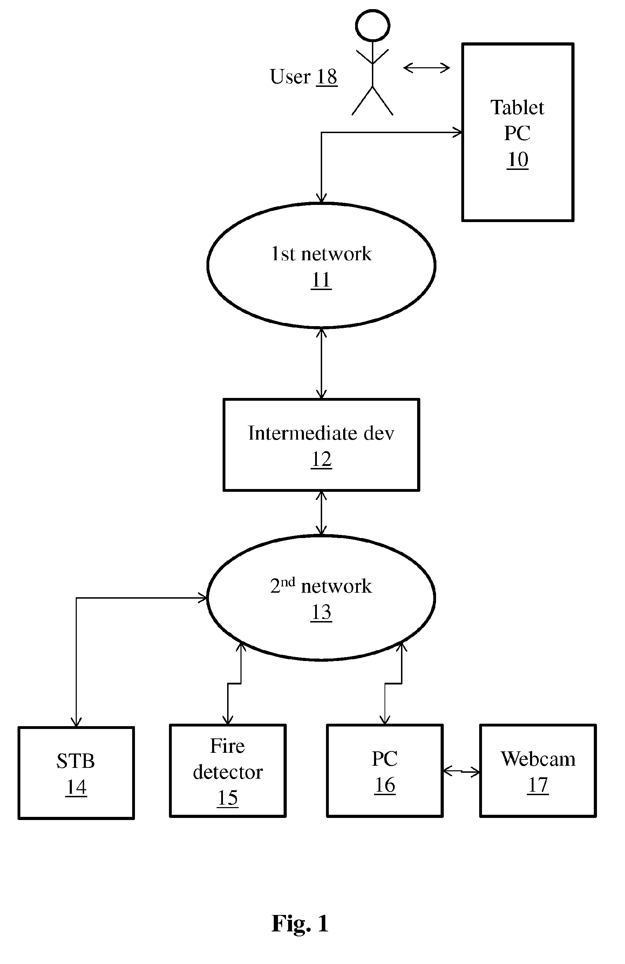

**Figure 1** is a network infrastructure illustrating an application of principles of the present disclosure, according to a specific, non-limiting embodiment. Depicted is a user (18) operating a first network (e.g. a Wide Area Network or WAN) device, here a tablet PC (personal computer) (10). The tablet PC is connected to the first network (11), such as the Internet. An intermediate device, here gateway (12), is connected to the first network and to a second network (e.g. a Local Area Network or LAN). The second network (13) interconnects several second network devices such as: Internet Protocol Set Top Box (STB) (14) that is equipped with a Personal Video Recorder (PVR); a fire detector (15); and a personal computer (16) that is equipped with a webcam (17). The second network is provided by the gateway. The disadvantages of prior art will be better understood when considering the following scenarios. According to a first scenario "A", the user is at work and stays late for an international conference call at 7:00 PM. Not being able to return to home before his favorite TV series starts at 9:00 PM, he wishes to configure the PVR of his STB-PVR to record his favorite TV series using his tablet PC. However, unfortunately the STB-PVR has entered standby state. According to prior art, the user is therefore unable to establish a connection with the device and thus cannot instruct it to record the desired program. The user would have been able to program a recording while the STB-PVR was powered on, but he cannot when the STB-PVR is in standby state. According to a second scenario "B", the user is on holidays and a fire alarm icon pops up on his tablet PC. Before calling the fire department, he wishes to verify what is going on in his house and thus obtain an image of the webcam. However, since the PC to which the webcam is connected is in a standby state, it is impossible for him to obtain an image from the webcam.

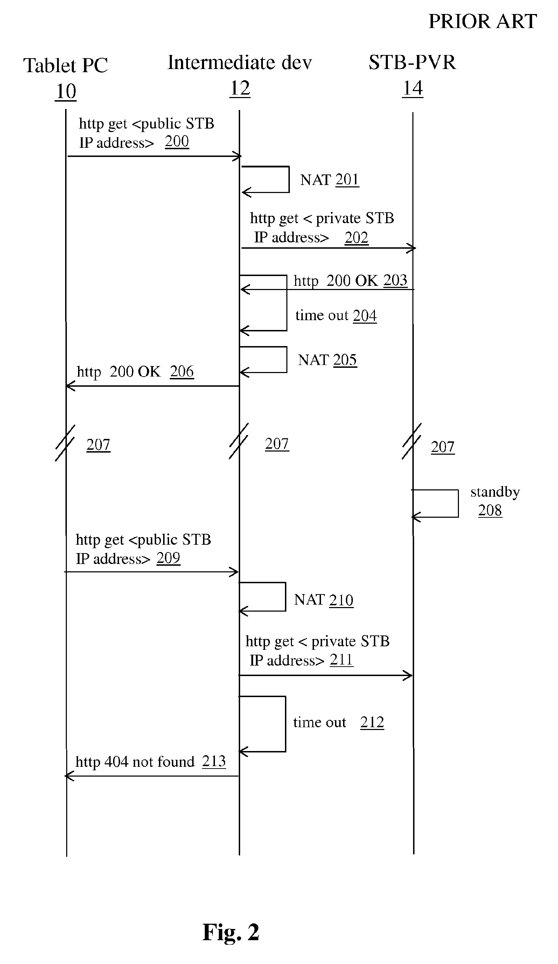

**Figure 2** is a sequence diagram illustrating prior art principles related to the present disclosure. In the diagram are shown, from left to right, a first network device (tablet PC 10), an intermediate device (gateway 12), and a second network device (Set Top Box with PVR function 14). The diagram illustrates two variants of the previously mentioned scenario "A", separated by pairs of forward slashes (//; 207). According to a first variant that starts with message 200 and that ends with message 206, the STB-PVR is in a power on state. When the user wants to program the STB-PVR to record his favorite TV series, he uses a web browser on his tablet PC in order to retrieve the web page of his STB-PVR that allows him to enable the recording function. Tablet PC 10 thus transmits an http get request (200) addressed to the STB-PVR, using the STB-PVR's public Internet Protocol (IP) address. The request is received by the gateway. The gateway comprises a Network Address Translator (NAT) that translates (201) the public IP address of the STB into the private IP address that is valid on the second network, and forwards (202) the http get request from the tablet PC to that private IP address, and starts (204) a time out timer. As STB-PVR is switched on, the STB-PVR's internal web server replies (203), within the delay set for the time out, to the http request with an "HTTP 200 OK" message and provides the desired web page information in the payload of the reply message. If necessary, the gateway performs again a NAT (205) and transmits (206) the reply message to the tablet PC. A second variant of scenario "A" is illustrated with help of messages 208 to 213. According to this variant, the STB-PVR has entered (208) standby state due to prolonged inactivity. Now, when the user wants to program the STB-PVR to record his favorite TV series, he uses the web browser on his tablet PC in order to retrieve the web page of his STB-PVR that allows him to enable the recording function. Tablet PC thus transmits (209) an http get request addressed to the STB-PVR, using the STB-PVR's public IP address. The request is received by the gateway. The gateway's NAT translates (210) the public IP address of the STB into the private IP address that is valid on the second network, and forwards (211) the http get request from the tablet PC to the private IP address of the STB 14, and starts (212) a time out timer. However, as the STB-PVR is now in a standby state, it does not reply to the message. On the gateway, the delay set for the time out expires and the gateway transmits (213) an http error message (e.g. "HTTP 404 Not Found") to the tablet PC, indicating that the STB-PVR is not available.

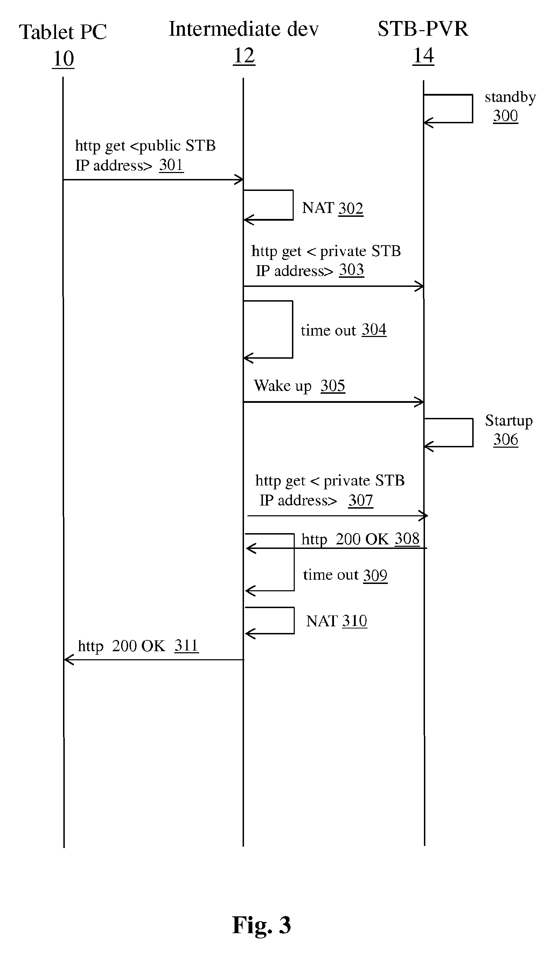

**Figure 3** is a further sequence diagram illustrating principles of the present disclosure according to a non-limiting embodiment. Again, a variant of scenario "A" is illustrated. The scenario starts with the STB-PVR entering (300) a standby state for example due to prolonged device inactivity. The user that wants to program his STB-PVR to record his favorite TV series at 9:00PM, transmits an http request message (301) addressed to the public address of the STB-PVR. The gateway's NAT translates (302) the STB-PVR's public address into the STB-PVR's private address and according to a particular embodiment of the present disclosure, forwards (303) the http get request to the STB-PVR and starts (304) a time out timer. The time out value of the time out timer is advantageously chosen to be smaller than the standard time out value for http requests (if the standard http time out for receiving a reply to an http request is e.g. 30s, the time out value of the time out timer can be set to, for example, 5, or 10s); it can be expected that if the STB-PVR is not in the standby state, the reply to the http request will be received fast as it is transmitted on the local network from the gateway to the STB-PVR without further intermediate devices or routers. If the time out value for the time out is chosen to be shorter than the time out value for http requests, there is enough remaining time after the time out timer has expired to wake up the STB-PVR, and for http request message (301) to be replied in time. As the STB-PVR is in the standby state, it does not respond to the http get request, and the time out timer expires. The gateway determines from the expiring of the time out that the STB-PVR is not available and tries to wake up the STB-PVR by transmitting (305) a wake up request to it, and the STB-PVR starts up (306). According to a particular embodiment of the present principles, this wake up request is a Wake-on-second network (WOL) "magic packet". According to a variant embodiment, this wake up request is a Bluetooth EXIT_SUSPEND control command. According to a variant embodiment, this wake up request is a transmission of one or more signals on an interface of the second network device, such as the transmission of Wake Pulses on a MHL (Mobile High-definition Link). According to a particular embodiment of the present principles, the gateway starts a time out (309) after having transmitted the wake up request to the STB-PVR before transmitting the http get request message again (307) to the STB-PVR. According to a variant embodiment, the gateway transmits the http get request message (307) when it received a notification from the STB-PVR that it has powered up. When the STB-PVR replies (308) to the http get request message (307) (e.g. within the time out delay), the gateway performs a NAT (310) (if necessary) and forwards (311) the reply to the tablet PC, or the STB-PVR replies directly to the tablet PC. Not shown: according to a variant embodiment, when the STB-PVR does not reply within the time out delay to the http request message, the gateway transmits an error message to the tablet PC, indicating that the STB-PVR is not available (e.g. "HTTP 404 Not Found").

It can thus be observed that, advantageously and according to the present principles, the request from the first network device for using a service of a second network device is satisfied, even when the second network device is in a standby state. It can thus be observed that advantageously and according to the present principles, any wakeup operation of second network devices is rendered transparent for the user of a first network device, which user and which first network device does even not need to be aware if the second network device is in a standby state or not. It can thus be observed that, advantageously and according to the present principles, there is no more technical obstacle to allow second network devices to enter a power-saving standby state, and the present principles thereby contribute to reduction of energy consumed by second network devices.

According to an advantageous variant embodiment of the present principles, the gateway is informed by each of the second network devices of the method to use to wake up the second network devices from a standby state to a power on state. Advantageously, the gateway can then immediately choose the appropriate method to wake up each particular second network device. This is an advantageous alternative to a variant embodiment in which the gateway tries several wake up methods until the second network device wakes up or until all of the several wake up methods have been tried without success. With regard to the previously discussed scenario "B", a further variant comprises a second network device that has peripherals connected to it via direct connections such as a PC equipped with a USB webcam, and the second network device informs the gateway that a wakeup method for the webcam is the wakeup method for waking up the PC.

According to an advantageous variant embodiment, the gateway is informed by each of the second network devices when the devices enter and/or exit the standby state. Advantageously, the gateway does not lose any time in determining if a device is in standby or not. When a first network device needs the services of a second network device, the gateway looks up in memory if the second network device is in a standby state or not; if it is in a standby state, it does not waste any time and wakes up the second network device. This is an advantageous alternative to a previous described variant embodiment in which the gateway first transmits a message to the second network device (such as message 303 of figure 3), starts a time-out timer (e.g. 304) and only then determines that the second network device is in the standby state when the time-out timer expires, which means that possibly precious time is lost in waiting for the time-out timer to expire before transmitting the wakeup message (e.g. 305). This is also an advantageous alternative to a previous described variant embodiment according to which the gateway always transmits a wake up message to the second network device, without knowledge if it is in a standby state or not; one of the multiple advantages is that no unnecessary wake up messages are transmitted over the second network, thereby contributing to bandwidth reduction.

According to an advantageous variant embodiment of the present principles, a publish-subscribe or "pubsub" method is used in the second network. According to the paradigm of the pubsub method, publishers only send messages to subscribers to those messages. A publisher publishes the messages that it can transmit, and the subscriber subscribes to the messages that are of particular interest to him. The pubsub model proposes a topic based system in which messages are published to topics, and subscribers can subscribe to a topic and thus receive all messages related to the topic. The pubsub model also proposes a content based system, where a subscriber can subscribe to a particular content in messages, to receive all messages comprising the subscribed-to content. The advantage of the pubsub system is the loose coupling of publishers to subscribers, especially if a message broker is used that is responsible for managing the subscriptions and the forwarding of messages according to the descriptions. Then publishers do not even need to be aware who is listening to their messages. Pubsub protocols are for example enabled in the DDS (Data Distribution Service) protocol, the MQTT (MosQuito Telemetry Transport) protocol that uses a message broker, or in Qeo technology brought to the AllSeen Alliance by Technicolor.

In a variant embodiment that is based on the pubsub principles, the second network devices publish messages that notify of entry and exit of the standby state. The gateway subscribes to all messages related to the topic "standby" or to the content "standby" and receives a message from the second network devices when they enter into or exit from the standby state. This way, there is no time lost in determining by a trial and error method if a second network device is in a standby state or not. According to a further variant embodiment of the pubsub variant, the second network devices specify, when entering into the standby state, the manner in which they can be woken up. Advantageously, there is no time lost in a trial and error method to wake up a second network device. This can be particular advantageous in a heterogeneous real-life second network environment, with devices connected by various connection means such as WiFi, Bluetooth, Ethernet, USB, UPNP, and/or other.

According to a variant embodiment that is based on pubsub principles such as proposed by Qeo, the first network device (e.g. tablet PC 10 of figure 1) runs a Qeo daemon that subscribes to all "Standby Announcement" state topics. The intermediate device (e.g. gateway 12) runs a Qeo daemon that subscribes to all "Wake Up Request" topics from second network devices. When a second network device publishes a "Standby Announcement" topic in a notification message, it provides in the notification message data describing how to wake the second network device from the standby state. The first network device's Qeo daemon receives the topic and records it. When the first network device runs an application that wishes to transmit an http request to a second network device (e.g., an http get request to the STB-PVR), it calls a Qeo library in the first network device for wakeup management. The Qeo library in the first network device looks up the "standby announcement" topic for the second network device (e.g. a standby announcement from the STB-PVR) and notices that the second network device is in a standby state. The Qeo library then publishes a Qeo topic "WakeUP Request" comprising information related to the waking up of the second network device with the wakeup method specified by the second network device when it entered standby state (e.g. wakeup: (<STB-PVR>, <wakeup method>)). This Qeo topic is received by the Qeo daemon in the gateway. The Qeo daemon in the gateway wakes up the second network device using the method specified in the topic (=transmission of a wake up request). The second network device publishes a "Standby announcement" topic comprising information that the second network device has been woken up. The topic is received by the Qeo daemon in the first network device which records it. Alternatively, the topic is received by the Qeo daemon in the intermediate device (e.g. the gateway), and the gateway transmits the topic to the first network where it is received by the Qeo daemon in the first network device. The second network device is now in the on state and the http request (the http get request destined to the STB-PVR) is transmitted by the application to the second network device, whereby the gateway provides NAT for addressing the request to the second network device as usual.

According to yet another variant embodiment that is based on pubsub principles such as proposed by Qeo, the first network device (e.g. the tablet PC) runs a Qeo daemon that subscribes to all "Alive" state topics. When a second network device (e.g. STB-PVR) publishes an "Alive" topic, meaning "I am alive for a duration d, after that wake me up with method A", the first network device's Qeo daemon receives and records the topic. After duration d, the second network device goes to standby. When the first network device (e.g. via a web application running on the PC tablet), wishes to use the second network device, the underlying Qeo library already knows that the second network device is in standby, and awakes the second network device using the wake up method that was specified by the device when it published the alive topic (= transmission of a wake up request). The second network device publishes a "Standby announcement" topic comprising information that the second network device is woken up. The topic is received by the Qeo daemon in the first network device (e.g. the tablet PC) and records it. Alternatively, the topic is received by the Qeo daemon in the gateway, and the gateway transmits the topic to the first network where it is received by the Qeo daemon in the first network device. The second network device is now in the on state and the http request (the http get request destined to the STB-PVR) is transmitted by the web application to the second network device, whereby the gateway provides NAT for addressing the request to the second network device as usual.

According to a variant embodiment, if several second network devices that can provide the desired service, e.g. if several STB's in the second network are capable of recording a desired TV program, are capable of replying to the wake up request, one of the several capable second network devices is elected, e.g. the first capable second network device that transmits an "alive" state topic. This variant can be based on capability topics that are transmitted by the second network devices and recorded by the intermediate device, the capability topics describing functional capabilities of the second network devices.

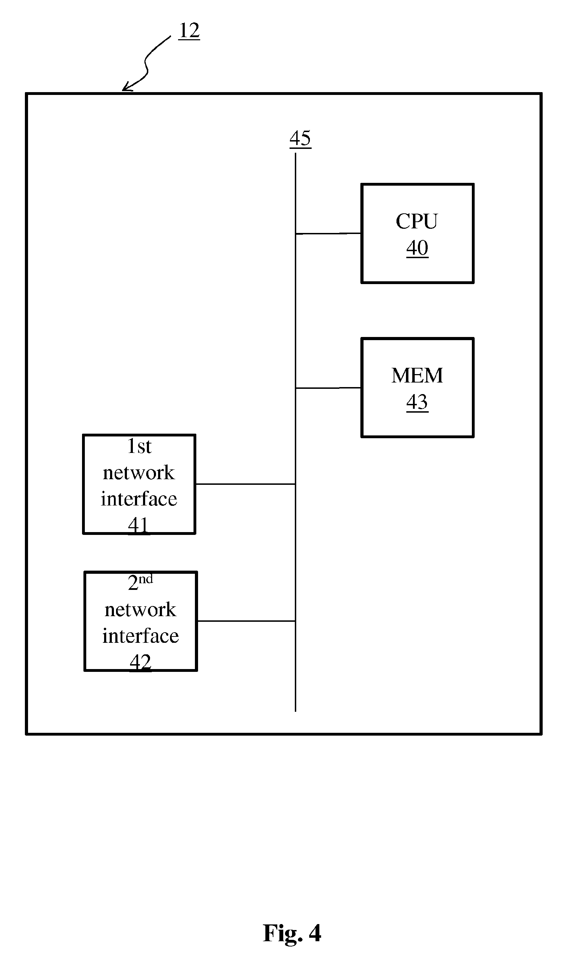

**Figure 4** is an example device implementing principles of the present disclosure according to a non-limiting embodiment. The device is for example an intermediate device (e.g. gateway 12 of figure 1). The device comprises a first network interface (41) means configured to receive a request from a first network device destined to a second network device for rendering of a service to the first network device; a processing unit (40) means configured to determine if the second network device is in standby state; and a second network interface (42) means configured to transmit the received request to the second network device for rendering of the service. Advantageously, the device further comprises a memory (43) means configured to store subscriptions to notification messages from second network devices informing the intermediate device of entry of the second network devices into a standby state. According to a variant embodiment the second network interface means is further configured to transmit subscription messages for subscribing the intermediate device to first notification messages from second network devices informing the intermediate device of entry of the second network devices into a standby state. According to a variant embodiment, the second network interface means is further configured to transmit subscription messages for subscribing the intermediate device to second notification messages from the second network devices informing the intermediate device of exit of the second network devices from standby state. According to a variant embodiment the first network interface means is a Wide Area Network interface, and the second network interface means is a Local Area Network interface. The processing unit, the first network interface, the second network interface and the memory are interconnected by means of an internal data communication bus (45).

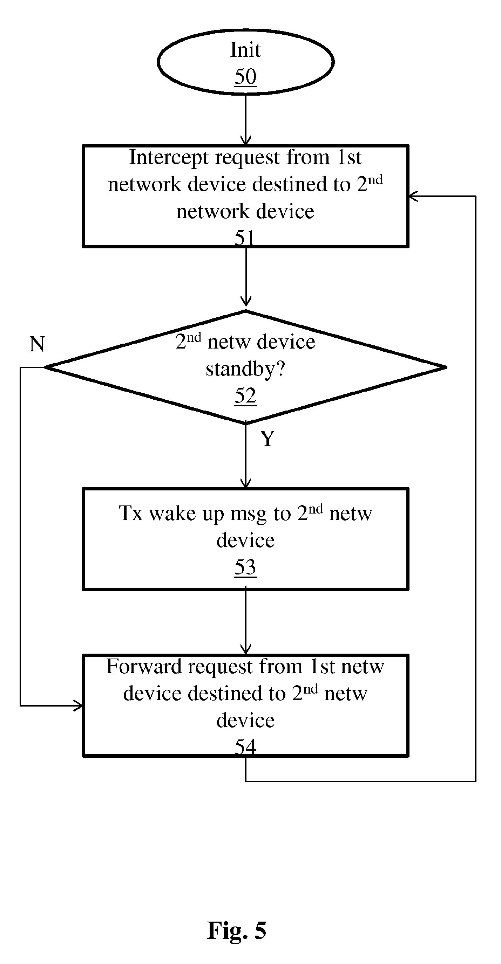

**Figure 5** is a flow chart of a particular advantageous non-limiting embodiment of a method according to the present principles. The method is for example implemented by device 12 of figures 1 and 4. In a first step (50), any variables, memory and data structures are initialized. In a second step (51) a request from a first network device destined to a second network device for rendering of a service to the first network device is intercepted. In a third step (52), it is determined if the second network device for rendering the service is in a standby state. If it is determined that the second network device for rendering the service is in a standby state, a message is transmitted (53) to the second network device for waking up the second network device from standby state. In either case, finally, the request that was received from the first network is forwarded (54) to the second network device for rendering of the service, and the algorithm continues with step 51 of waiting for a request from a first network device destined to a second network device.

The present disclosure also comprises a non-transitory program storage device, readable by a computer, tangibly embodying a program of instructions executable by said computer to perform the described method of data communication between devices in a first network and devices in second network, or one or more of the described variant embodiments of the discussed method for data communication between devices in a first network and devices in second network.

As will be appreciated by one skilled in the art, aspects of the present principles can be embodied as a system, method or computer readable medium. Accordingly, aspects of the present principles can take the form of an entirely hardware embodiment, en entirely software embodiment (including firmware, resident software, micro-code and so forth), or an embodiment combining hardware and software aspects that can all generally be defined to herein as a "circuit", "module" or "system". Furthermore, aspects of the present principles can take the form of a computer readable storage medium. Any combination of one or more computer readable storage medium(s) can be utilized.

Thus, for example, it will be appreciated by those skilled in the art that the diagrams presented herein represent conceptual views of illustrative system components and/or circuitry embodying the principles of the present disclosure. Similarly, it will be appreciated that any flow charts, flow diagrams, state transition diagrams, pseudo code, and the like represent various processes which may be substantially represented in computer readable storage media and so executed by a computer or processor, whether or not such computer or processor is explicitly shown.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information there from. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

## Claims

1. A method of data communication between devices in a first network and devices in second network, **characterized in that** the method is implemented by an intermediate device connecting said first network and said second network, said method comprising:
receiving (51) a request from a first network device destined to a second network device for rendering of a service to said first network device;
if said second network device for rendering said service is in a standby state, transmitting (53) a message to said second network device for waking up said second network device from standby state; and
forwarding (54) said request to said second network device for rendering said service.

2. The method according to Claim 1, wherein said method comprises subscribing, by the intermediate device, to a reception of first notification messages from second network devices informing said intermediate device of entry of said second network devices into a standby state.

3. The method according to Claim 2, wherein said method comprises subscribing, by the intermediate device, to reception of second notification messages from said second network devices informing said intermediate device of exit of said second network devices from standby state.

4. The method according to Claim 2 or 3, wherein said first notification messages comprise data describing how to wake up said second network devices from standby state.

5. The method according to Claim 4, wherein, when a second network device is connected to the second network via another second network device, said data comprised in said first notification message describes how to wake up said intermediate second network device.

6. The method according to any of Claims 2 to 4, wherein said intermediate device determines if a second network device is in a standby state by determining if a notification message has been received from said second network device informing the intermediate device of an entry of the second network device into standby state.

7. The method according to Claim 4, wherein said message for waking up a second network device from standby state is determined from a notification message, received from said second network device, comprising information allowing said intermediate device to determine how to wake up said second network device from standby state.

8. The method according to Claim 1, wherein said intermediate device determines if a second network device is in a standby state by transmitting a message to said second network device and starting a time out, said second network device being in a standby state if no reply message is received from said second network device before expiry of said time out.

9. The method according to any of the preceding Claims, wherein said first network is a Wide Area Network.

10. The method according to any of the preceding Claims, wherein said second network is a Local Area Network.

11. An intermediate device for connecting devices in a first network and devices connected in a second network, **characterized in that** it comprises:
means (41) configured to receive a request from a first network device destined to a second network device for rendering of a service to said first network device;
means (42) configured to transmit a message to said second network device for waking up said second network device if said second network device is in a standby state; and
said means (42) configured to transmit a message to said second network device for waking up said second network device if said second network device is in a standby state being further configured to transmit said request received to said second network device for rendering of said service.

12. The intermediate device according to Claim 11, further comprising means (43) configured to store subscriptions to notification messages from second network devices informing said intermediate device of entry of said second network devices into a standby state.

13. The intermediate device according to Claim 12, further comprising means configured to transmit subscription messages for subscribing said intermediate device to first notification messages from second network devices informing said intermediate device of entry of said second network devices into a standby state.

14. The intermediate device according to Claim 12 or 13, further comprising means configured to transmit subscription messages for subscribing said intermediate device to second notification messages from said second network devices informing said intermediate device of exit of said second network devices from standby state.

15. The intermediate device according to any of Claims 11 to 14, wherein said means configured to receive a request from a first network device is a Wide Area Network interface, and said means configured to transmit a message to said second network device is a Local Area Network interface.
